(19) Europäisches Patentamt / European Patent Office / Office européen des brevets

(11) **EP 3 209 976 B1**

(12) **EUROPÄISCHE PATENTSCHRIFT**

(45) Veröffentlichungstag und Bekanntmachung des Hinweises auf die Patenterteilung:
**21.04.2021 Patentblatt 2021/16**

(21) Anmeldenummer: **15787506.3**

(22) Anmeldetag: **19.10.2015**

(51) Int Cl.:
**G01F 25/00** *(2006.01)*     **G01P 5/24** *(2006.01)*
**G01F 1/66** *(2006.01)*

(86) Internationale Anmeldenummer:
**PCT/EP2015/074160**

(87) Internationale Veröffentlichungsnummer:
**WO 2016/062668 (28.04.2016 Gazette 2016/17)**

(54) **VERFAHREN ZUR ULTRASCHALL-CLAMP-ON-DURCHFLUSSMESSUNG UND SCHALTUNGSANORDNUNG ZUR STEUERUNG EINER ULTRASCHALL-CLAMP-ON-DURCHFLUSSMESSUNG**

METHOD FOR AN ULTRASOUND CLAMP-ON FLOW MEASUREMENT AND CIRCUIT ARRANGEMENT FOR CONTROL OF AN ULTRASOUND CLAMP-ON FLOW MEASUREMENT

PROCÉDÉ DE MESURE DE DÉBIT PAR ULTRASONS DIRECTEMENT SUR UN TUYAU ET ENSEMBLE FORMANT UN CIRCUIT POUR LA COMMANDE D'UNE MESURE DE DÉBIT PAR ULTRASONS DIRECTEMENT SUR UN TUYAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2014 DE 102014115203**

(43) Veröffentlichungstag der Anmeldung:
**30.08.2017 Patentblatt 2017/35**

(73) Patentinhaber: **Flexim Flexible Industriemesstechnik GmbH
12681 Berlin (DE)**

(72) Erfinder: **FUNCK, Bernhard
18059 Rostock (DE)**

(74) Vertreter: **Grünbaum, Annekathrin et al
Schnick & Garrels Patentanwälte PartG mbB
Schonenfahrerstraße 7
18057 Rostock (DE)**

(56) Entgegenhaltungen:
EP-A1- 1 736 741     DE-A1-102005 047 790
DE-A1-102012 013 774     JP-A- S60 202 310

**Beschreibung**

Die Erfindung betrifft ein Verfahren und eine Anordnung zur Ultraschall-Clamp-on-Durchflussmessung nach dem Laufzeitverfahren.

Clamp-on-Durchflussmessgeräte finden breiten Einsatz in vielen Bereichen der Industrie. Einer ihrer wesentlichen Vorteile besteht darin, dass die Durchflussmessung berührungslos stattfindet. Bei Clamp-on-Durchflussmessgeräten nach dem Laufzeitverfahren wird die Laufzeitdifferenz zweier sich in bzw. gegen die Strömung ausbreitender Schallsignale gemessen und daraus der Volumenstrom berechnet. Dazu werden zwei Schallwandler auf der Rohrwand befestigt, die beide als Sender und als Empfänger betrieben werden können. Ein Schallwandler besteht aus einem aktiven Element wie z.B. einer Piezokeramik, das auf einem sogenannten Schallwandlervorlauf so angeordnet ist, dass die Schallausbreitung unter dem Einstrahlwinkel alpha erfolgt. Die Erzeugung der Anregungsimpulse für die Schallwandler und die Auswertung der Empfangsignale der Schallwandler erfolgt im Messumformer. Dieser stellt für jeden Schallwandler einen Messkanal bereit. Die Laufzeitdifferenz dt hängt von der mittleren Strömungsgeschwindigkeit VI auf dem Schallpfad, der Sensorkonstanten Ka sowie der Schallaufzeit t_fl im Fluid ab. Der Zusammenhang wird durch folgende Formel beschrieben:

$$VI = Ka * (dt/2t\_fl) \qquad Gl. (1)$$

Dabei ist Ka die Sensorkonstante, die den Einstrahlwinkel im Fluid bestimmt:

$$Ka = c\_alpha / \sin(alpha) \qquad Gl. (2)$$

Hier sind alpha und c_alpha der Einstrahlwinkel bzw. die Schallgeschwindigkeit im Schallwandlervorlauf. Um den Volumenstrom zu berechnen muss noch der strömungsmechanische Kalibrierfaktor KF bekannt sein, welcher das Verhältnis des Flächenmittelwertes der Strömungsgeschwindigkeit VA zur mittleren Strömungsgeschwindigkeit VI auf dem Schallpfad darstellt:

$$KF = VA/VI \qquad Gl. (3)$$

Dann ergibt sich der Volumenstrom Q mit der Querschnittsfläche A des Rohres zu:

$$Q = KF*A*Ka*(dt/2t\_fl) \qquad Gl. (4)$$

Bei der Clamp-on-Durchflussmessung werden diametrale Schallpfade verwendet, das heißt, die beiden für die Erzeugung eines Schallpfades nötigen Schallwandler sind so auf dem Rohr angeordnet, dass der Schallpfad die Rohrachse schneidet. Dazu können die Schallwandler auf gegenüberliegenden Seiten des Rohres angeordnet sein. Es handelt sich dann um die sogenannte Direktanordnung. Werden zwei Direktanordnungen so angeordnet, dass die Schallpfade sich kreuzen, dann spricht man von der X-Anordnung (DE 102011005170 B4, DE 102005047790 A1). Alternativ ist die Reflexanordnung möglich, bei der die Schallwandler auf derselben Seite des Messrohres angeordnet sind und das Schallsignal an der gegenüberliegenden Rohrinnenseite einmal reflektiert wird. (DE 102008029772 A1) Die X-Anordnung und die Reflexanordnung sind in Figur 1 und Figur 2 gezeigt.

Im Folgenden soll die einmalige Ausbreitung von der Rohrinnenwand zu gegenüberliegenden Rohrinnenwand als Schallpfad bezeichnet werden. Dann wird mit der Direktanordnung ein einzelner Schallpfad realisiert und mit der Reflexanordnung zwei Schall-Pfade. In beiden Anordnungen kann die Anzahl der Schallpfade durch Mehrfachreflexionen an der Rohrinnenwand erhöht werden. In Reflexanordnung sind damit gerade Schallpfadzahlen möglich, in Direktanordnung sind ungerade Schallpfadzahlen möglich. Die Gesamtheit aller Schallpfade zwischen den beiden Schallwandlern eines Schallwandlerpaares soll als Schallweg bezeichnet werden. Der Vorteil der Erhöhung der Schallpfadzahl besteht in der Verlängerung des Schallweges bei kleinen Rohren. Die von den beiden Schallpfaden der X-Anordnung bzw. der Reflexanordung gebildete Ebene wird als Messebene bezeichnet.

Der Vorteil der Reflexanordnung besteht u.a. darin, dass nicht axiale Komponenten des Strömungsvektors weitgehend kompensiert werden, da sie auf den beiden Einzelpfaden mit umgekehrtem Vorzeichen wirken. Bei der Clamp-on-Durchflussmessung wird ein ungestörtes Strömungsprofil vorausgesetzt. Dies ist bei ausreichend langer gerader Einlaufstrecke vor der Messstelle gegeben. Der Strömungsvektor liegt dann in Rohrachsenrichtung, enthält also nur die axiale Komponente Vax. Der nach Gl. (1) berechnete Pfadmittelwert VL ist dann mit dem Pfadmittelwert von Vax identisch. In der Praxis sind die Einlaufbedingungen aber meist nicht ideal. Dann enthält der Strömungsvektor außerdem die Querkomponente Vcr (Cross-flow), die senkrecht zur Rohrachse orientiert ist und in der Ebene liegt, die aus Rohrachse und Schallpfad gebildet wird. Die Querkomponente hat im Messwert des Pfadmittelwertes Vl_1path eines einzelnen Pfades in Direktanordnung folgenden Einfluss:

$$VL\_1path = Vax - Vcr[\cos(gamma)/\sin(gamma)] \qquad \text{Gl. (5)}$$

Hier ist gamma der Ausbreitungswinkel im Messmedium gemessen gegenüber dem Lot auf die Rohrwand. Bei Reflex- oder X-Anordnung entfällt der Querkomponenteneinfluss wenn angenommen wird, dass sich die Querströmung innerhalb des Messvolumens nicht ändert. Das liegt daran, dass der Winkel Gamma in Gl. (5) für die beiden in der Reflex- bzw. X-Anordnung enthaltenen einzelnen Schallpfade ein umgekehrtes Vorzeichen hat.

Die Reflexanordnung ist aber nicht immer möglich. Die maximal messbare Strömungsgeschwindigkeit ist proportional zur Schallweglänge, sodass die Direktanordnung gewählt wird, wenn in der Reflexanordnung die maximal messbare Strömungsgeschwindigkeit kleiner als der gewünschte Messbereich ist.

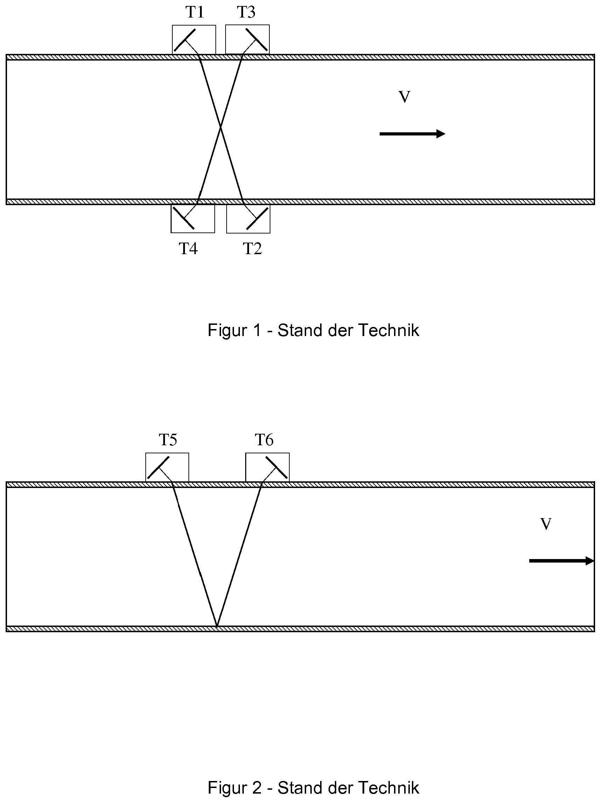

Die Reflexanordnung kompensiert zwar die Querkomponenten des Strömungsvektors, eine Detektion der Querkomponenten ist damit aber nicht möglich. Dazu eignet sich die in Figur 1 gezeigte X-Anordnung. Im Mittelwert der Einzelmessungen auf den beiden Schallpfaden ist die Querströmung ebenso kompensiert wie in der Reflexanordnung. Aus der Differenz der Einzelmessungen kann darüber hinaus der Betrag der Querströmung berechnet werden. Wenn auf den beiden Einzelpfaden der X-Anordnung die Pfadmittelwerte VL_X1 und VL_X2 gemessen werden und die Winkel gamma ein jeweils gegensätzliches Vorzeichen haben aber vom Betrag identisch sind, dann ergibt sich mit Gl. (5):

$$Vl\_X1 - Vl\_X2 = 2\, Vcr[\cos(gamma)/\sin(gamma)] \qquad \text{Gl. (6)}$$

Also beträgt die Querströmungskomponente

$$Vcr = 1/2\,[Vl\_X1 - Vl\_X2]/[\cos(gamma)/\sin(gamma)] \qquad \text{Gl. (7)}$$

Der Winkel gamma ergibt sich nach dem Snellius'schen Brechungsgesetz aus der Sensorkonstante Ka nach Gl. (2) und der Schallgeschwindigkeit im Messmedium.

Das Vorhandensein einer Querströmung weist auf eine Störung der Einlaufbedingungen hin. Die Querströmungsdetektion stellt also eine zusätzliche Diagnosemöglichkeit dar.

Beide Anordnungen, die Reflex-und die X-Anordnung, haben also ihre Vorteile. Um die Vorteile beider Anordnungen zu nutzen, müssten in herkömmlicher Technik beide Anordnungen installiert und vom Messumformer bedient werden. Eine Reflex- und eine X-Anordnung erfordern zusammen drei Schallwandlerpaare und entsprechend einen Messumformer mit sechs Messkanälen. Wünschenswert wäre es, mit möglichst wenigen Schallwandlern beide Messanordnungen zu realisieren.

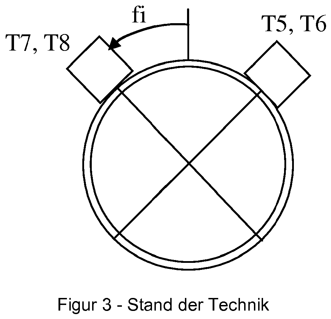

Störstellen wie z.B. 90° -Bögen erzeugen neben den bereits genannten Querströmungskomponenten auch eine Asymmetrie des Strömungsprofils. Der Einfluss von Asymmetrien kann durch Verwendung mehrerer Messebenen begegnet werden. Dazu eignen sich z.B. zwei der in Figur 2 gezeigten Reflexanordnungen, die dann in Rohrumfangsrichtung um 90° gegeneinander versetzt und an derselben axialen Position auf dem Rohr angeordnet werden. Dies ist in Figur 3 gezeigt. Ebenso können zwei X-Anordnungen in zwei Messebenen angeordnet werden. Wenn der in Rohrumfangsrichtung gemessene Winkel der ersten Messebene mit fi bezeichnet wird, dann hat die zweite Messebene den Winkel fi+90. Damit können zwei Querströmungskomponenten Vcr_fi und Vcr_fi90 gemessen und daraus der Betrag Vcr_m und der Winkel teta_Vcr des Vektors der Querströmungskomponente berechnet werden:

$$Vcr\_m = \sqrt{(Vcr\_fi)^2 + (Vcr\_fi90)^2} \qquad \text{Gl. (8)}$$

$$teta\_Vcr = \arctan(Vcr\_fi\,/\,Vcr\_fi90) \qquad \text{Gl. (9)}$$

Um sowohl zwei Reflexanordnungen als auch zwei X-Anordnungen zu realisieren, werden in herkömmlicher Technik insgesamt sechs Schallwandlerpaare und entsprechend 12 Messkanäle am Messumformer benötigt.

DE 10248593 A1 beschreibt eine Anordnung, die es ermöglicht, mit einem einzigen Schallwandlerpaar verschiedene Schallpfadzahlen zu realisieren, ohne dass die Position der Schallwandler auf dem Rohr entsprechend der Schallpfadzahl verändert werden muss. Realisiert wird dies dadurch, dass Schallwandler mit großem Öffnungswinkel verwendet werden. Ein Schallwandlerpaar, das als Reflexanordnung mit zwei Schallpfaden auf dem Rohr installiert ist, kann auch die Signale empfangen, die mit dreifacher Reflexion an der Rohrinnenwand auf vier Schallpfaden laufen. Realisiert wird damit aber immer nur entweder die Reflexanordnung oder die Direktanordnung, jeweils mit unterschiedlicher Schallpfadzahl.

DE 102005047790 A1 beschreibt eine Anordnung, die zwei Schallpfade mit drei Schallwandlern und zwei Messkanälen ermöglicht, indem zwei der drei Schallwandler parallelgeschaltet sind und somit zeitgleich angeregt werden. Dies hat allerdings den Nachteil, dass sich die Laufzeiten auf den beiden Schallpfaden ausreichend stark unterscheiden müssen, damit die beiden Signale sich nicht zu stark überlagern und somit voneinander separierbar bleiben.

DE 102008029772 A1 beschreibt eine Anordnung mit mindestens zwei Sensoren, bei der mindestens einer der beiden Sensoren mindestens zwei Schallwandler enthält. Damit können also mit derselben Anordnung mindestens zwei verschiedene Schallpfade realisiert werden. Der Nutzen der Anordnung besteht darin, dass keine aufwendige Anpassung der Sensorposition an die Schallgeschwindigkeit des Messmediums erforderlich ist. Die Schallwandler werden innerhalb des Sensors so angeordnet, dass sich für die entsprechenden Schallpfade unterschiedliche Ausbreitungswinkel im Medium ergeben und während einer Diagnosephase der für das jeweilige Messmedium optimale Schallpfad ausgewählt wird. Die gleichzeitige Realisierung von Reflex- und Direktanordnung ist damit nicht möglich.

Weitere Ultraschall-Durchflussmess-Systeme sind aus den folgenden Schriften bekannt, die allerdings das beschriebene Problem nicht lösen. So beschreibt US 6293156 B1 ein Ultraschall-Durchflussmess-System nach dem Kreuzkorrelationsverfahren. Beansprucht wird eine Lösung, bei der nur ein Sendewandler und zwei Empfangswandler benötigt werden um zwei Schallpfade zu erzeugen, deren Signale korreliert werden. US 2013/0174669 A1 offenbart eine Durchflussmessung nach einem Laufzeitdifferenzverfahren, wobei wahlweise die Laufzeitdifferenz zwischen Upstream- und Downstreamsignal auf einem Pfad in Direktanordnung (Mode 1) oder die Laufzeitdifferenz zwischen den Downstreamsignalen auf zwei Pfaden in Direktanordnung mit unterschiedlichem Pfadwinkel (Mode 2) ermittelt wird. Als Vorteil wird genannt, dass bei hoher Strömungsgeschwindigkeit die Downstreamsignale üblicherweise bessere Qualität haben als die Upstreamsignale. Dann wird Mode 1 genutzt. Wenn beide Modi nutzbar sind, kann die Querströmung ermittelt und somit kompensiert werden. Die Anordnung erlaubt also die Erweiterung der Turn-Down-Ratio und die Kompensation von Querströmung, jedoch nicht beides gleichzeitig. Die Selbstkompensation der Querströmung, wie sie in der Reflexanordnung realisiert ist, ist damit nicht möglich.

Eine Anordnung, die wahlweise die Messung nach dem Laufzeitverfahren und nach dem Dopplerverfahren ermöglicht, beschreibt US 8019559 B1. In US 8234934 B2 werden durch Nutzung des Öffnungswinkels zusätzlich Messpfade zwischen nicht zusammengehörigen Wandlerpaaren (über kreuz) gebildet. Damit werden zusätzliche Diagnosewerte gewonnen, ohne dafür zusätzliche Wandler einbauen zu müssen. US 4015470 A realisiert eine Kombination eines senkrechten Schallpfades zur Schallgeschwindigkeitsmessung und eines schrägen Schallpfades zur Strömungsmessung. In EP 2072972 A1 wird ein Mehrpfaddurchflussmesser mit nicht-diametralen Messpfaden offenbart und US 20140109645 A1 beansprucht einen Condition Monitor zur Überwachung der Funktion des Durchflussmessgerätes. US 20110271769 A1 offenbart die Auswertung des Rohrwandsignals im Vergleich mit dem Fluidsignal für die Schallgeschwindigkeitsmessung unter Verwendung von Lamb-Wellen. Eine Kombination des Laufzeitdifferenzverfahrens mit einem Korrelationsverfahren, dass auf Signalen basiert, die von Teilchen im strömenden Fluid reflektiert werden, beschreibt US 5533408 A und in US 5440937 A wird eine Direktanordnung zur Laufzeitdifferenzmessung offenbart.

Die in EP 1736741 A1 vorgestellte Lösung ermöglicht Schallübertragung zwischen zwei Schallwandlern entweder direkt oder mit ein- oder mehrfacher Reflexion an der Rohrinnenwand. Dies wird durch Verwendung von Schallwandlern mit großem Öffnungswinkel von mehr als 60° quer zur Rohrachse erreicht.

Bei DE 102012013774 A1handelt es sich um eine Kreiselpumpe mit einem Ultraschall-Durchflussmesser im und/oder am Saug- und/oder Druckstutzen. Hier arbeiten die Ultraschallsensoren entweder ausschließlich in der Direktanordnung oder in Reflexanordnung. Für die Reflexion ist im Innern des Saug- und/oder Druckstutzens ein Reflektor vorgesehen.

In JP S60202310 A sind vier Sensoren angeordnet, wobei jeweils zwei in Reflexanordnung und zwei in Direktanordnung zusammen arbeiten. Immer zwei Sensoren liegen sich dabei diametral auf dem Rohr gegenüber, wobei sie Sensoren auf einer Seite des Rohrs um 90Grad versetzt zu den Sensoren auf der anderen Seite des Rohrs liegen.

## Darstellung der Erfindung

Der Erfindung liegt die Aufgabe zugrunde eine Messanordnung zur Clamp-on-Durchflussmessung zu schaffen, die mit nur zwei Schallwandlerpaaren die Möglichkeit bietet, sowohl in Reflexanordnung als auch in X-Anordnung zu messen, ohne dass beim Wechsel zwischen den Anordnungen die Schallwandlerposition verändert werden muss.

Für das erfindungsgemäße Verfahren sind vier Schallwandler auf einem Messrohr angeordnet, die in der Art angesteuert werden, dass die Durchflussmessung abwechselnd nacheinander in X-Anordnung und in Reflexanordnungen erfolgt. Dazu sind jeweils zwei Schallwandler zu je einem Sende-Empfangspaar für eine Durchflussmessung in X-Anordnung bzw. je zwei Schallwandler zu je einem Sende-Empfangspaar für zwei Reflexanordnungen verschaltet.

Mit den so angeordneten Schallwandlern werden eine mittlere Strömungsgeschwindigkeit sowie eine Querströmungskomponente ermittelt, wobei die Querströmungskomponente als Diagnosewert gespeichert und zur Anzeige gebracht wird, und bei Überschreiten eines vorher definierten Maximalwerts der Querströmungskomponente ein Warnsignal erzeugt wird.

In einer weiteren Ausführungsform des Verfahrens erfolgt eine erste Durchflussmessung in X-Anordnung, bei der mindestens eine mittlere Strömungsgeschwindigkeit ermittelt wird. Bei der mittleren Strömungsgeschwindigkeit kleiner als die für die Reflexanordnung zulässige maximale Strömungsgeschwindigkeit wird eine zweite Durchflussmessung in Reflexanordnung durchgeführt, oder bei der ermittelten Strömungsgeschwindigkeit größer oder gleich der für die Reflexanordnung zulässigen maximalen Strömungsgeschwindigkeit wird die Durchflussmessung in X-Anordnung wiederholt.

Die erfindungsgemäße Schaltungsanordnung zur Steuerung einer Ultraschall-Clamp-on-Durchflussmessung nach dem Laufzeitverfahren enthält vier Schallwandler, die auf einem Messrohr paarweise, sich diametral gegenüberliegend angeordnet sind. Dazu sind ein Signalgeber über vier Schaltelemente und ein Verstärker über vier weitere Schaltelemente mit den Schallwandlern verbunden, wobei für eine erste Messung die je zwei Schallwandler zu je einem Sende-Empfangspaar verschaltet werden, so dass zwei Schallwandler als Sendeeinheiten und zwei Schallwandler als Empfangseinheiten für eine Durchflussmessung in X-Anordnung beschaltet sind, und für eine zweite Durchflussmessung je zwei Schallwandler über die vier Schaltelemente zu je einem Sende-Empfangspaar für die Durchflussmessung in Reflexanordnung verschaltet werden.

In einer Ausführungsform sind vier Schallwandler enthalten, welche paarweise, sich diametral gegenüberliegend, auf dem Messrohr angeordnet sind. Die Durchflussmessung in Reflexanordnung oder in X-Anordnung wird mittels einer Steuereinrichtung realisiert. Je nach Ansteuerung durch die Steuereinrichtung bilden jeweils zwei Schallwandler jeweils ein Sende-Empfangspaar für die Durchflussmessung in zwei Reflexanordnungen oder jeweils ein Sende-Empfangspaar für die Durchflussmessung in X-Anordnung.

Der Vorteil der Erfindung besteht darin, dass die Vorteile der Reflexanordnung, nämlich dass nicht axiale Komponenten des Strömungsvektors weitgehend kompensiert werden, und der X-Anordnung, nämlich eine Detektion der Querkomponenten, in einer Anordnung vereint werden.

**Ausführung der Erfindung**

Nachfolgend werden die Ausführungsbeispiele der Erfindung anhand der Zeichnungen näher erläutert. Hierzu zeigen

Figur 1 X-Anordnungen von Schallwandlern nach dem Stand der Technik,
Figur 2 Reflex-Anordnungen von Schallwandlern nach dem Stand der Technik,
Figur 3 zwei Reflexanordnungen um 90° gegeneinander versetzt nach dem Stand der Technik
Figur 4 eine erfindungsgemäße Anordnung zweier Reflexanordnungen auf dem Messrohr,
Figur 5 ein Ausschnitt aus Figur 4 und
Figur 6 eine Schaltungsanordnung zur Ansteuerung der Schallwandler.

Wie bereits beschrieben, werden in der Clamp-on-Durchflussmessung eine Reflexanordnung der Schallwandler auf derselben Seite des Messrohres (zwei Schallpfade) oder eine Direktanordnung der Schallwandler auf gegenüberliegenden Seiten des Rohres (ein einzelner Schallpfad) oder die Kombination zweier Direktanordnungen zur X-Anordnung angewendet. Sowohl die Reflex- als auch die X-Anordnung haben ihre Vor- und Nachteile. Wünschenswert wäre also die Möglichkeit, beide Anordnungen parallel zu betreiben, was nach dem Stand der Technik mit drei Schallwandlerpaaren umgesetzt werden könnte. Um diese Anordnung dann in zwei Messebenen zu installieren sind sechs Schallwandlerpaare und 12 Messkanäle erforderlich.

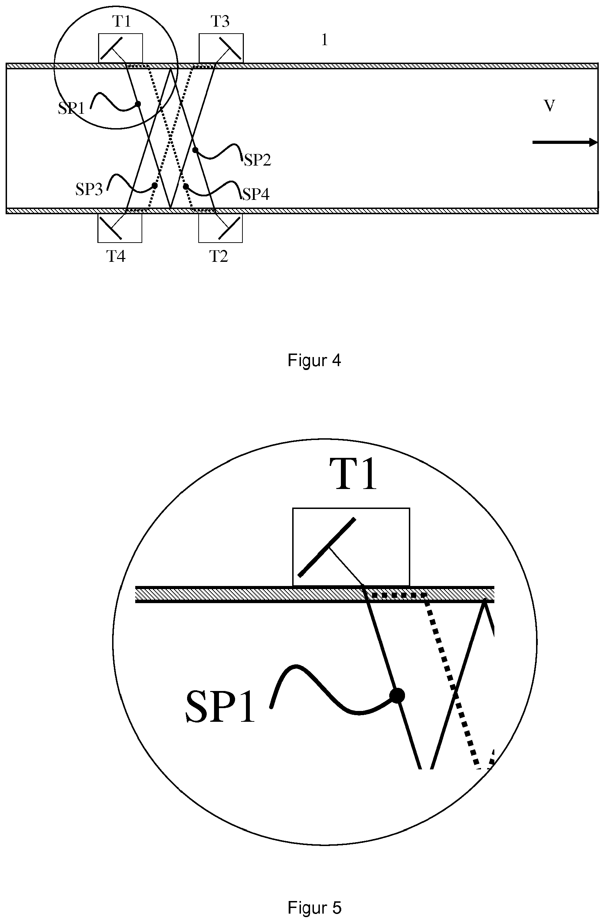

Die erfinderische Lösung besteht nun darin, dass beide Verfahren mit denselben Schallwandlern durchgeführt werden, d.h. mit der für zwei Reflexanordnungen optimalen Sensoranordnung wird auch eine X-Anordnung realisiert. Hierzu sind, wie in Figur 4 gezeigt, zwei Reflexanordnungen, auf gegenüberliegenden Positionen auf dem Messrohr 1 installiert, durch das ein Volumenstrom V fließt. Der untere linke Schallwandler T4 ist dem oberen linken Schallwandler T1 und der untere rechte Schallwandler T2 ist dem oberen rechten Schallwandler T3 diametral gegenüber auf dem Messrohr 1 angeordnet. Die erste Reflexanordnung wird zwischen oberen linken Schallwandler T1 und oberen rechten Schallwandler T3 mit dem Schallpfad SP1 und die zweite Reflexanordnung zwischen unteren rechten Schallwandler T2 und unteren linken Schallwandler T4 mit dem Schallpfad SP2 realisiert. Die Schallpfade SP1 und SP2 enthalten jeweils eine Reflexion an der den Schallwandlern jeweils gegenüberliegenden Rohrinnenwand. Die Schallpfade beider Reflexanordnungen liegen dabei in derselben Ebene.

Um mit denselben Schallwandlern T1 bis T4 eine X-Anordnung zu realisieren, müssten die Abstände zwischen dem oberen linken Schallwandler T1 und dem oberen rechten Schallwandler T3 und dem unteren rechten Schallwandler T2 und dem unteren linken Schallwandler T4 in Rohrachsenrichtung verringert werden. Es hat sich aber gezeigt, dass insbesondere bei Nutzung von Oberflächenwellenmoden der Rohrwand, eine gewisse Abweichung des Sensorabstandes vom Optimalwert möglich ist. Der auf den Schallpfaden SP3 und SP4 verlaufende Schall wird in der X-Anordnung bei Verwendung von Oberflächenwellenmoden von dem oberen linken Schallwandlern T1 und dem oberen rechten Schallwandler T3 in die Rohrwand eingestrahlt und breitet sich parallel zur Rohroberfläche aus. Während der Ausbreitung in der Rohrwand wird kontinuierlich Schall in das Medium abgestrahlt. Auf der gegenüberliegenden Seite der Rohrwand verlaufen die Schallpfade SP3 und SP4 nach dem Auftreffen ebenfalls ein Stück parallel zur Rohroberfläche bis zu dem unteren rechten Schallwandlern T2 und dem unteren linken Schallwandler T4. Im Medium bildet sich dadurch ein sehr breiter Schallstrahl. Für die Laufzeitberechnung können ersatzweise die in Figur 4 gestrichelt gezeigten Schallpfade SP3 und SP4 verwendet werden. Figur 5 zeigt einen Ausschnitt aus Figur 4, in dem der Verlauf des Schallpfades SP4 im Rohr am oberen linken Schallwandler T1 deutlicher zu sehen ist. Die Vergrößerung des Sensorabstandes vom Optimalwert bewirkt eine Vergrößerung der Laufzeit zwischen den Schallwandlern dadurch, dass die Laufzeit in der Rohrwand vergrößert wird. Dies kann jedoch kompensiert werden, da die Laufzeit durch die Rohrwand t_pipe aus der Ausbreitungsgeschwindigkeit der Welle in der Rohrwand c_pipe und dem zusätzlichen Abstand x_pipe berechnet werden kann

$$t\_pipe = x\_pipe/c\_pipe \qquad\qquad \text{Gl. (10)}$$

Die Schallaufzeit t_fl im Fluid ergibt sich aus der Gesamtlaufzeit t vom Sendeschallwandler zum Empfangsschallwandler und der Laufzeit tdelay durch die Schallwandlervorläufe und die Elektronik sowie der Laufzeit in der Rohrwand t_pipe zu

$$t\_fl = t - tdelay - t\_pipe \qquad\qquad \text{Gl. (11)}$$

Außerdem gilt für t_fl

$$t\_fl = 2d/\cos(gamma)/c\_fl \qquad\qquad \text{Gl. (12)}$$

Der Ausbreitungsweg x_pipe in der Rohrwand ergibt sich aus dem Abstand x0 zwischen dem Schalleintritt und dem Schallaustritt in der Rohrwand und dem Ausbreitungsweg x_fl im Fluid. Der Weg x_fl ist abhängig vom Innendurchmesser d des Rohres und tangential abhängig vom Einstrahlwinkel gamma im Fluid. Es wird das Brechungsgesetz nach Snellius und die entsprechenden trigonometrischen Beziehungen zugrundegelegt. Die Schallgeschwindigkeit im Fluid c_fl wird dann berechnet nach:

$$c\_fl = c\_pipe\,2\,d\,/\,\sqrt{((t - tdelay)c\_pipe)^2 - x0 + 4d^2} \qquad\qquad \text{Gl. (13)}$$

Mit Gl. (12) kann dann auch die Schalllaufzeit im Fluid t_fl berechnet werden.

Die Oberflächenwellenmoden eignen sich in besonderer Weise, die Ultraschallsignale vom Schallwandler in das Medium zu übertragen und dabei auch eine Ausbreitung in Rohrlängsachsrichtung zu erzeugen. Prinzipiell sind aber auch weitere sogenannte Plattenmoden in der Rohrwand verwendbar. Welche Moden die Schallausbreitung in der Rohrwand dominiert, wird durch den Einstrahlwinkel und die Schallgeschwindigkeit der Schallwandler sowie die Schallgeschwindigkeit und Dicke der Rohrwand bestimmt.

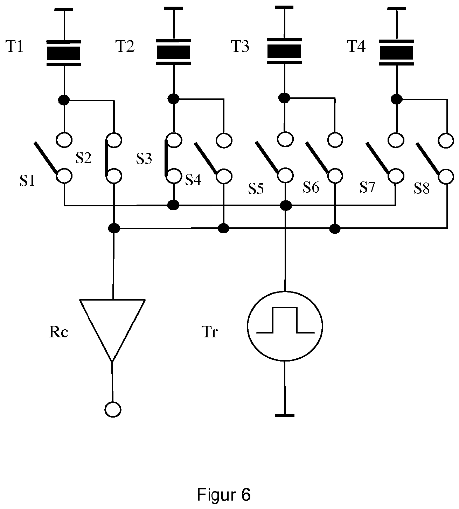

Für den erfindungsgemäßen Betrieb der zwei Reflexanordnungen und der X-Anordnung ist ein Messumformer erforderlich, der vier Schallwandler T1, T2, T3 und T4 ansteuert, von denen je zwei einen Schallpfad realisieren. Figur 6 zeigt eine mögliche Schaltungsanordnung zur Ansteuerung der Schallwandler T1, T2, T3 und T4. Die Schaltung besteht neben den vier Schallwandlern T1, T2, T3 und T4 aus einem Signalgeber Tr, sowie acht Schaltelementen S1-S8 und einem Verstärker Rc. Über die Schaltelemente S1, S3, S5 und S7 wird der Signalgeber Tr mit den Schallwandlern T1, T2, T3 und T4 verbunden. Werden die Schallwandler T1, T2, T3 und T4 mit einem Anregungsimpuls (beispielsweise mit einem Rechteck-Puls) angesteuert, fungieren sie als akustische Sendeeinheit. Des Weiteren verbinden die Schaltelemente S2, S4, S6 und S8 die Schallwandler T1, T2, T3 und T4 mit dem Verstärker Rc. Durch eine entsprechende gesteuerte Betätigung der Schaltelemente werden die gewünschten Sende-Empfangspaare (X-Anordnung oder Reflexanordnungen) realisiert. Für eine erste Messung werden der obere linke Schallwandler T1 und der untere rechte Schallwandler T2 über die Schaltelemente S2, S3 (Figur 6) und anschließend der obere rechte Schallwandler T3 und der untere linke Schallwandler T4 über die Schaltelemente S6 und S7 zu je einem Sende-Empfangspaar verschaltet und damit eine X-Anordnung realisiert, wobei der untere rechte Schallwandler T2 und der untere linke Schallwandler T4 als Sendeeinheiten und der obere linke Schallwandler T1 und der obere rechte Schallwandler T3 als Empfangseinheiten beschaltet sind. Für eine zweite Messung werden der obere linke Schallwandler T1 und der obere rechte Schallwandler T3 sowie der untere rechte Schallwandler T2 und der untere linke Schallwandler T4 zu je einem Sende-Empfangspaar über die Schaltelemente S2, S5, S3 und S8 verschaltet und damit zwei Reflexanordnungen realisiert.

Die beiden Reflexanordnungen und die X-Anordnung sind somit durch verschiedene Betriebsmodi des Messumformers bei unveränderter Schallwandleranordnung realisierbar.

Für die Durchführung des Verfahrens in einer ersten Ausführungsform sind der obere linke Schallwandler T1 und der untere rechte Schallwandler T2 diametral gegenüber dem oberen rechten Schallwandler T3 und dem unteren linken Schallwandler T4 angeordnet. Sie werden abwechselnd in X-Anordnung und in Reflexanordnung betrieben. Dabei ist zu beachten, dass die maximalen zulässigen Strömungsgeschwindigkeiten beider Anordnungen unterschiedlich sind, wobei die maximal zulässige Strömungsgeschwindigkeit für die X-Anordnung immer größer ist. Es erfolgt zunächst eine Messung in X-Anordnung wobei die mittlere Strömungsgeschwindigkeit sowie die Querströmungskomponente ermittelt werden. Wenn die so ermittelte Strömungsgeschwindigkeit kleiner ist als die für die Reflexanordnung zulässige maximale Strömungsgeschwindigkeit, dann wird die nächste Messung in Reflexanordnung betrieben, ansonsten wird die nächste Messung wieder in X-Anordnung betrieben. Die Querströmungskomponente wird als Diagnosewert gespeichert und zur Anzeige gebracht. Wenn die Querströmungskomponente einen vorher definierten Maximalwert überschreitet, wird ein Warnsignal erzeugt.

Eine zweite Ausführungsform besteht darin, dass der obere linke Schallwandler T1 und der untere rechte Schallwandler T2 sowie der obere rechte Schallwandler T3 und der untere linke Schallwandler T4, wie in für die erste Ausführungsform beschrieben, angeordnet werden. Für eine zweite Messebene werden entsprechend weitere Schallwandler angeordnet, die um 90° gegeneinander in Rohrumfangsrichtung versetzt sind. Damit wird zunächst in den beiden Messebenen nacheinander in X-Anordnung gemessen und aus den in den beiden Messebenen gemessenen mittleren Strömungsgeschwindigkeiten die mittlere Strömungsgeschwindigkeit der beiden Messebenen, der Betrag bzw. der Winkel des Vektors der Querströmungskomponente berechnet. Wenn die mittlere Strömungsgeschwindigkeit kleiner als die für die Reflexanordnung zulässige maximale Strömungsgeschwindigkeit ist, dann wird die nächste Messung in beiden Messebenen in Reflexanordnung betrieben, ansonsten wird die nächste Messung in beiden Messebenen wieder in X-Anordnung betrieben. Der Betrag und der Winkel des Vektors der Querströmungskomponente können als Diagnosewert gespeichert und zur Anzeige gebracht werden. Wenn der Betrag und/oder der Winkel der Querströmungskomponente einen vorher definierten Maximalwert überschreiten, kann ein Warnsignal erzeugt werden.

### Patentansprüche

1. Verfahren zur Ultraschall-Clamp-on-Durchflussmessung nach dem Laufzeitverfahren, wobei vier Schallwandler (T1, T2, T3, T4) auf einem Messrohr (1) angeordnet sind, **dadurch gekennzeichnet, dass** die mindestens vier Schallwandler (T1, T2, T3, T4) mittels einer Steuereinrichtung in der Art angesteuert werden, dass die Durchflussmessung nacheinander in X-Anordnung und in Reflexanordnungen erfolgt.

2. Verfahren nach Anspruch 1 **dadurch gekennzeichnet, dass** jeweils zwei obere, nebeneinanderliegende rechte und linke Schallwandler (T3, T1) den jeweils zwei unteren, nebeneinanderliegenden rechten und linken Schallwandlern (T2, T4) gegenüberliegen, und der obere linke Schallwandler (T1) mit dem unteren rechten Schallwandler (T2) sowie der obere rechte Schallwandler (T3) mit dem unteren linken Schallwandler (T4) zu je einem Sende-Empfangspaar für eine Durchflussmessung in X-Anordnung verschaltet werden und der obere linke Schallwandler (T1) mit dem oberen rechten Schallwandler (T3) sowie der untere linke Schallwandler (T4) mit dem unteren rechten Schallwandler (T2) zu je einem Sende-Empfangspaar für zwei Reflexanordnungen verschaltet werden.

3. Verfahren nach Anspruch 1 oder 2 **dadurch gekennzeichnet, dass** eine mittlere Strömungsgeschwindigkeit sowie eine Querströmungskomponente ermittelt werden, wobei die Querströmungskomponente als Diagnosewert gespeichert und zur Anzeige gebracht wird, und bei Überschreiten eines vorher definierten Maximalwerts der Querströmungskomponente ein Warnsignal erzeugt wird.

4. Verfahren nach Anspruch 1 oder 2 **dadurch gekennzeichnet, dass** eine erste Durchflussmessung in X-Anordnung erfolgt, bei der mindestens eine mittlere Strömungsgeschwindigkeit ermittelt wird,
dass bei der mittleren Strömungsgeschwindigkeit kleiner als die für die Reflexanordnung zulässige maximale Strömungsgeschwindigkeit eine zweite Durchflussmessung in Reflexanordnung durchgeführt wird, oder dass bei der ermittelten Strömungsgeschwindigkeit größer oder gleich der für die Reflexanordnung zulässigen maximalen Strömungsgeschwindigkeit die Durchflussmessung in X-Anordnung wiederholt wird.

5. Schaltungsanordnung zur Steuerung einer Ultraschall-Clamp-on-Durchflussmessung nach dem Laufzeitverfahren, wobei vier Schallwandler (T1, T2, T3, T4) auf einem Messrohr (1) angeordnet sind, **dadurch gekennzeichnet, dass** die vier Schallwandler (T1, T2, T3, T4) paarweise, sich diametral gegenüberliegend, auf dem Messrohr (1) angeordnet sind und ein Signalgeber (Tr) über Schaltelemente (S1, S3, S5 und S7) und ein Verstärker (Rc) über Schaltelemente (S2, S4, S6 und S8) mit den Schallwandlern (T1, T2, T3 und T4) verbunden sind, wobei für eine erste Messung ein oberer linker Schallwandler (T1) über Schaltelement (S2) und Schaltelement (S3) mit einem unteren rechten Schallwandler (T2) und anschließend ein oberer rechter Schallwandler (T3) über Schaltelement (S6) und Schaltelement (S7) mit einem unteren linken Schallwandler (T4) zu je einem Sende-Empfangspaar verschaltet werden, so dass der untere rechte Schallwandler (T2) und der untere linke Schallwandler (T4) als Sendeeinheiten und der obere linke Schallwandler (T1) und der obere rechte Schallwandler (T3) als Empfangseinheiten beschaltet sind, und damit die Durchflussmessung in X-Anordnung realisiert wird und für eine zweite Durchflussmessung der obere linke Schallwandler (T1) und der obere rechte Schallwandler (T3) sowie der untere rechte Schallwandler (T2) und der untere linke Schallwandler (T4) zu je einem Sende-Empfangspaar über Schaltelement (S2), Schaltelement (S5), Schaltelement (S3) und Schaltelement (S8) verschaltet werden und damit die Durchflussmessung in Reflexanordnung realisiert wird.

6. Schaltungsanordnung nach Anspruch 5, **dadurch gekennzeichnet, dass** die vier Schallwandler (T1, T2, T3, T4) paarweise, sich diametral gegenüberliegend, auf dem Messrohr (1) angeordnet sind, und dass mittels einer Steuereinrichtung sowohl die Durchflussmessung in Reflexanordnung als auch in X-Anordnung realisiert wird.

7. Schaltungsanordnung nach Anspruch 6 **dadurch gekennzeichnet, dass** jeweils zwei obere, nebeneinanderliegende rechte und linke Schallwandler (T3, T1) den jeweils zwei unteren, nebeneinanderliegenden rechten und linken Schallwandlern (T2, T4) gegenüberliegen, und der untere linke Schallwandler (T4) dem oberen linken Schallwandler (T1) und der untere rechte Schallwandler (T2) dem oberen rechten Schallwandler (T3) diametral gegenüber auf dem Messrohr (1) angeordnet sind und dass je nach Ansteuerung durch die Steuereinrichtung der obere linke Schallwandler (T1) und der obere rechte Schallwandler (T3) sowie der untere linke Schallwandler (T4) und der untere rechte Schallwandler (T2) jeweils ein Sende-Empfangspaar für die Durchflussmessung in Reflexanordnung bilden und der obere linke Schallwandler (T1) und der untere rechte Schallwandler (T2) sowie der obere rechte Schallwandler (T3) und der untere linke Schallwandler (T4) jeweils ein Sende-Empfangspaar für die Durchflussmessung in X-Anordnung bilden.

**Claims**

1. Method for an ultrasonic clamp-on flow measurement according to the time-of-flight principle, wherein four acoustic transducers (T1, T2, T3, T4) are arranged on a measurement pipe (1), **characterized in that** the at least four acoustic transducers (T1, T2, T3, T4) are actuated by means of a control device in such a way that the flow measurement is implemented consecutively in an X-arrangement and in reflection arrangements.

2. Method according to Claim 1, **characterized in that** two respective upper, right and left acoustic transducers (T3, T1) which lie next to one another lie opposite the two respective lower, right and left acoustic transducers (T2, T4) which lie next to one another, and the top left acoustic transducer (T1) is connected to the bottom right acoustic transducer (T2) and the top right acoustic transducer (T3) is connected to the bottom left acoustic transducer (T4) to form a transmitter-receiver pair for a flow measurement in an X-arrangement, and the top left acoustic transducer (T1) is connected to the top right acoustic transducer (T3) and the bottom left acoustic transducer (T4) is connected to the bottom right acoustic transducer (T2) to form a transmitter-receiver pair for two reflection arrangements.

3. Method according to Claim 1 or 2, **characterized in that** a mean flow speed and a transverse flow component are ascertained, wherein the transverse flow component is stored as diagnostic value and displayed, and a warning signal is generated if a maximum value of the transverse flow component, defined in advance, is exceeded.

4. Method according to Claim 1 or 2, **characterized in that** a first flow measurement is carried out in X-arrangement, within the scope of which at least one mean flow speed is ascertained, **in that** a second flow measurement is carried out in reflection arrangement if the mean flow speed is less than the maximum flow speed permissible for the reflection arrangement or **in that** the flow measurement is repeated in X-arrangement if the ascertained flow speed is greater than or equal to the maximum flow speed permissible for the reflection arrangement.

5. Circuit arrangement for controlling an ultrasonic clamp-on flow measurement according to the time-of-flight principle, wherein four acoustic transducers (T1, T2, T3, T4) are arranged on a measurement pipe (1), **characterized in that** the four acoustic transducers (T1, T2, T3, T4) are arranged diametrically opposite one another in pairwise fashion on the measurement pipe (1) and a transducer (Tr) is connected to the acoustic transducers (T1, T2, T3 and T4) via switching elements (S1, S3, S5 and S7) and an amplifier (Rc) is connected to said acoustic transducers via switching elements (S2, S4, S6 and S8), wherein, for a first measurement, an upper left acoustic transducer (T1) is connected to a lower right acoustic transducer (T2) via switching element (S2) and switching element (S3) and subsequently an upper right acoustic transducer (T3) is connected to a lower left acoustic transducer (T4) via switching element (S6) and switching element (S7) to form a transmitter-receiver pair in each case such that the lower right acoustic transducer (T2) and the lower left acoustic transducer (T4) are connected as transmitter units and the upper left acoustic transducer (T1) and the upper right acoustic transducer (T3) are connected as receiver units and hence the flow measurement is realized in X-arrangement and, for a second flow measurement, the top left acoustic transducer (T1) and the top right acoustic transducer (T3) as well as the bottom right acoustic transducer (T2) and the bottom left acoustic transducer (T4) are interconnected to each form a transmitter-receiver pair via switching element (S2), switching element (S5), switching element (S3) and switching element (S8) and hence the flow measurement is realized in reflection arrangement.

6. Circuit arrangement according to Claim 5, **characterized in that** the four acoustic transducers (T1, T2, T3, T4) are arranged diametrically opposite one another in pairwise fashion on the measurement pipe (1) and **in that** the flow measurement both in reflection arrangement and in X-arrangement is realized by means of a control device.

7. Circuit arrangement according to Claim 6, **characterized in that** two respective upper, right and left acoustic transducers (T3, T1) which lie next to one another lie opposite the two respective lower, right and left acoustic transducers (T2, T4) which lie next to one another, and the lower left acoustic transducer (T4) is arranged diametrically opposite upper left acoustic transducer (T1) and the lower right acoustic transducer (T2) is arranged diametrically opposite the upper right acoustic transducer (T3), in each case on the measurement pipe (1), and **in that**, depending on the actuation by the control device, the upper left acoustic transducer (T1) and the upper right acoustic transducer (T3) as well as the lower left acoustic transducer (T4) and the lower right acoustic transducer (T2) respectively form a transmitter-receiver pair for the flow measurement in reflection arrangement and the upper left acoustic transducer (T1) and the lower right acoustic transducer (T2) as well as the upper right acoustic transducer (33) and the lower left acoustic transducer (T4) respectively form a transmitter-receiver pair for the flow measurement in X-arrangement.

**Revendications**

1. Procédé de mesure de débit par ultrasons à montage externe, selon le procédé de temps de propagation, dans lequel quatre transducteurs acoustiques (T1, T2, T3, T4) sont disposés sur un tube de mesure (1), **caractérisé en ce que** les au moins quatre transducteurs acoustiques (T1, T2, T3, T4) sont pilotés au moyen d'un dispositif de commande de telle sorte que la mesure de débit est effectuée successivement dans un agencement en X et dans des agencements en miroir.

2. Procédé selon la revendication 1, **caractérisé en ce que** respectivement deux transducteurs acoustiques supérieurs (T3, T1), droit et gauche adjacents, sont opposés respectivement aux deux transducteurs acoustiques inférieurs (T2, T4), droit et gauche adjacents, et le transducteur acoustique supérieur gauche (T1) est interconnecté avec le transducteur acoustique inférieur droit (T2), et le transducteur acoustique supérieur droit (T3) est interconnecté avec le transducteur acoustique inférieur gauche (T4) pour former respectivement une paire d'émission/réception pour une mesure de débit dans l'agencement en X, et le transducteur acoustique supérieur gauche (T1) est interconnecté avec le transducteur acoustique supérieur droit (T3), et le transducteur acoustique inférieur gauche (T4) est interconnecté avec le transducteur acoustique inférieur droit (T2) pour former respectivement une paire d'émission/réception pour deux agencements en miroir.

3. Procédé selon la revendication 1 ou 2, **caractérisé en ce qu'**une vitesse d'écoulement moyenne, ainsi qu'une composante d'écoulement transversal sont déterminées, la composante d'écoulement transversal étant stockée sous forme de valeur de diagnostic et étant portée à l'affichage, et en cas de dépassement d'une valeur maximale de la composante d'écoulement transversal, définie au préalable, un signal d'avertissement est généré.

4. Procédé selon la revendication 1 ou 2, **caractérisé en ce que**
une première mesure de débit est effectuée dans l'agencement en X, dans laquelle ladite au moins une vitesse d'écoulement moyenne est déterminée,
à la vitesse d'écoulement moyenne, inférieure à la vitesse d'écoulement maximale admissible pour l'agencement en miroir, une deuxième mesure de débit est effectuée dans l'agencement en miroir, ou
à la vitesse d'écoulement déterminée, supérieure ou égale à la vitesse d'écoulement maximale admissible pour l'agencement en miroir, la mesure de débit dans l'agencement en X est répétée.

5. Montage de circuit permettant de commander une mesure de débit par ultrasons à montage externe, selon le procédé de temps de propagation, dans lequel quatre transducteurs acoustiques (T1, T2, T3, T4) sont disposés sur un tube de mesure (1), **caractérisé en ce que**
les quatre transducteurs acoustiques (T1, T2, T3, T4) sont disposés par paires, de manière diamétralement opposée, sur le tube de mesure (1), et un transmetteur de signaux (Tr) est relié par des éléments de circuit (S1, S3, S5 et S7) et un amplificateur (Rc) est relié par des éléments de circuit (S2, S4, S6 et S8) aux transducteurs acoustiques (T1, T2, T3 et T4), dans lequel, pour une première mesure, un transducteur acoustique supérieur gauche (T1) est interconnecté par l'élément de circuit (S2) et l'élément de circuit (S3) avec un transducteur acoustique inférieur droit (T2), et ensuite un transducteur acoustique supérieur droit (T3) est interconnecté par l'élément de circuit (S6) et l'élément de circuit (S7) avec un transducteur acoustique inférieur gauche (T4) pour former respectivement une paire d'émission/réception de sorte que le transducteur acoustique inférieur droit (T2) et le transducteur acoustique inférieur gauche (T4) sont câblés comme des unités d'émission, et le transducteur acoustique supérieur gauche (T1) et le transducteur acoustique supérieur droit (T3) sont câblés comme des unités de réception, et ainsi la mesure de débit est réalisée dans l'agencement en X, et pour une deuxième mesure de débit, le transducteur acoustique supérieur gauche (T1) et le transducteur acoustique supérieur droit (T3) ainsi que le transducteur acoustique inférieur droit (T2) et le transducteur acoustique inférieur gauche (T4) sont interconnectés pour former respectivement une paire d'émission/réception par l'élément de circuit (S2), l'élément de circuit (S5), l'élément de circuit (S3) et l'élément de circuit (S8), et ainsi la mesure de débit est réalisée dans l'agencement en miroir.

6. Montage de circuit selon la revendication 5, **caractérisé en ce que** les quatre transducteurs acoustiques (T1, T2, T3, T4) sont disposés par paires, de manière diamétralement opposée, sur le tube de mesure (1), et **en ce qu'**au moyen d'un dispositif de commande, la mesure de débit est réalisée à la fois dans l'agencement en miroir et dans l'agencement en X.

7. Montage de circuit selon la revendication 6, **caractérisé en ce que** respectivement deux transducteurs acoustiques supérieurs (T3, T1), droit et gauche adjacents, sont opposés respectivement aux deux transducteurs acoustiques inférieurs (T2, T4), droit et gauche adjacents, et le transducteur acoustique inférieur gauche (T4) est disposé de manière diamétralement opposé au transducteur acoustique (T1) supérieur gauche, et le transducteur acoustique (T2) inférieur droit est disposé de manière diamétralement opposée au transducteur acoustique supérieur droit (T3) sur le tube de mesure (1), et **en ce qu'**en fonction du pilotage par le dispositif de commande, le transducteur acoustique supérieur gauche (T1) et le transducteur acoustique supérieur droit (T3) ainsi que le transducteur acoustique inférieur gauche (T4) et le transducteur acoustique inférieur droit (T2) forment respectivement une paire d'émission/réception pour la mesure de débit dans l'agencement en miroir, et le transducteur acoustique supérieur gauche (T1) et le transducteur acoustique inférieur droit (T2) ainsi que le transducteur acoustique supérieur droit (T3) et le transducteur acoustique inférieur gauche (T4) forment respectivement une paire d'émission/réception pour la mesure de débit dans l'agencement en X.

T1    T3

V

T4    T2

Figur 1 - Stand der Technik

T5    T6

V

Figur 2 - Stand der Technik

Figur 3 - Stand der Technik

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011005170 B4
- DE 102005047790 A1
- DE 102008029772 A1
- DE 10248593 A1
- US 6293156 B1
- US 20130174669 A1
- US 8019559 B1
- US 8234934 B2
- US 4015470 A
- EP 2072972 A1
- US 20140109645 A1
- US 20110271769 A1
- US 5533408 A
- US 5440937 A
- EP 1736741 A1
- DE 102012013774 A1
- JP S60202310 A